# EUROPEAN PATENT SPECIFICATION

(11) **EP 0 674 596 B1**
(45) Date of publication and mention of the grant of the patent: **30.09.1998**
(21) Application number: 94905440.7
(22) Date of filing: 17.12.1993
(51) Int. Cl.: B65D 19/32, B29C 51/02, B29C 51/14, B29C 65/02

(54) **PANEL STRUCTURE AND PALLET UTILIZING SAME**
PLATTENSTRUKTUR UND DEREN ANWENDUNG IN EINER PALETTE
STRUCTURE DE PANNEAU ET PALETTE UTILISANT UNE TELLE STRUCTURE

(30) Priority: 18.12.1992 US 993762; 14.12.1993 US 166730
(43) Date of publication of application: 04.10.1995
(73) Proprietor: SHUERT, Lyle H., Bloomfield Hills, MI 48013 (US)
(72) Inventor: SHUERT, Lyle H., Bloomfield Hills, MI 48013 (US)
(74) Representative: Moreland, David, Dr.
(86) International application number: PCT/US93/12376
(87) International publication number: WO 94/14667

(56) References cited:
- JP-A-61 130 031
- US-A- 2 973 931
- US-A- 3 444 034
- US-A- 3 664 271
- US-A- 3 680 496
- US-A- 4 279 204
- US-A- 4 428 306
- US-A- 4 606 278
- US-A- 4 879 956

## Description

### Background of the Invention

This invention relates to panel structures and to plastic pallets embodying panel structures according to the invention.

Panel structures are in wide use for construction purposes and fabricating purposes. Prior art panel structures have been formed of either metal, a paper product such as cardboard, wood, or synthetic materials such as plastic. Panel structures ideally are lightweight, strong, durable and maintenance-free, provide all-weather performance, and are relatively inexpensive. Whereas a plurality of metal, paper, wood, and plastic panel structures have been proposed over the years, none have totally satisfied all of the above-noted criteria.

Panel structures are also widely used in packaging and, specifically, in the formation of pallets. Pallets have traditionally been formed of wood. Wood pallets, however, have many disadvantages. For example, they are subject to breakage and thus are not reusable over extended periods of time. Wood pallets also take up a considerable amount of valuable floor space in the warehouse when they are not in use.

In an effort to solve some of the problems associated with wood pallets, plastic pallets have been developed and employed with some degree of success. In one generally successful form of plastic pallet design, upper and lower plastic sheets are formed in separate molding operations and the two sheets are then selectively fused or knitted together in a suitable press to form a reinforced double wall or "twin sheet" structure. These twin sheet plastic pallets, although substantially more durable than the wooden pallets that they replace, tend to have a substantially higher initial cost than the corresponding wooden pallets due in large part to the relatively high cost of the raw plastic material required to form the pallet. It is therefore critical that the twin sheet type of pallet embody a structural design that maximizes the structural strength of the pallet for a given amount of plastic material employed to form the pallet. One form of twin sheet type plastic pallet that provides high structural strength for a given amount of plastic material is shown in applicant's United States Patent No. 4,879,956. However, even the improved design of this disclosure is unable to provide the necessary rigidity require for many pallet applications without utilizing increased amounts of plastic material and thereby adding to the expense of the pallet. US 2,973,931 (Brown) discloses a pallet comprising a pair of decks, each deck having a deck side adapted to receive a load on its surface and an underside, a plurality of spaced hollow projections extending from the underside, the hollow projections of one deck registering and nesting with the hollow projections of the other deck, when the two decks are assembled for storage, the decks when in spaced apart loading position having the projections on each deck in contact with the underside of the opposite deck to provide for supports for a load on the deckside, the space between the decks when in spaced apart position having substantially the same dimension as the length of the extension of the projections beyond the underside, the projections being in contacting relationship for preventing lateral movement of the decks relative to each other when the decks are in spaced apart assembled relationship.

### Summary of the Invention

According to a first aspect of the present invention there is provided a twin sheet panel structure comprising a first plastic sheet including a planar main body portion having inner and outer surfaces and a second plastic sheet positioned in parallel spaced relation to said first plastic sheet and including a main body portion having inner and outer surfaces, the first sheet further including a plurality of spaced hollow bosses opening in the outer surface of the first sheet main body portion and including annular side wall portions extending inwardly from said first sheet main body portion and terminating in inner wall portions, the second plastic sheet further including a plurality of spaced hollow bosses opening in the outer surface of the second sheet main body portion and including annular wall portions extending inwardly from said second sheet main body portion and terminating in inner wall portions, characterized in that the annular side wall portions of some of said first sheet bosses are fused to the annular side wall portions of some of said second sheet bosses.

The fused together annular side wall portions of the first and second sheets coact to provide an extremely rigid panel structure for a given amount of plastic material.

According to a further feature of the invention, the first sheet bosses are arranged in rows with the bosses in each row laterally spaced from each other and the second sheet bosses fit into the spaces between the first sheet bosses. The positioning of the first sheet bosses between the second sheet bosses, with the first sheet bosses fused to the second sheet and the second sheet bosses fused to the first sheet, provides an extremely rigid panel structure for a given amount of plastic material.

According to a further feature of the invention, the bosses are arranged on each sheet in a plurality of generally parallel laterally extending rows with the bosses in each row spaced laterally from each other, and the bosses in a row of the first sheet are interdigitated with respect to the bosses in a corresponding row of the second sheet with the adjacent side wall portions of the interdigitated bosses fused together. This arrangement has the effect of forming a plurality of rigid column structures between the sheets corresponding to the rows and produces an extremely rigid panel structure for a given amount of plastic material.

The panel structure may further comprise a twin sheet platform structure formed in accordance with the above-noted features of the invention panel structure and the pallet further includes a plurality of spaced legs extending downwardly from the platform structure to position the platform structure in upwardly spaced relation to a support surface on which the legs are position.

According to a second aspect of the present invention there is provided a method of forming a twin sheet plastic panel structure wherein a first plastic sheet is formed to include a generally planar main body portion having inner and outer surfaces and a plurality of spaced hollow bosses opening in the outer surface of the main body portion and including annular side wall portions extending inwardly from the main body portion and terminating in inner wall portions; and a second plastic sheet is formed to include a generally planar main body portion having inner and outer surfaces and a plurality of spaced hollow bosses opening in the outer surface of the second sheet main body portion and including annular side wall portions extending inwardly from the second sheet main body portion and terminating in inner wall portions; characterized in that
with said sheets in a heated, flowable state, the sheets are brought together to fuse side wall portions of said first sheet bosses to side wall portions of said second sheet bosses.

### Brief Description of the Drawings

FIGURE 1 is a perspective view of a panel structure according to the invention;
FIGURES 2 and 3 are cross-sectional views taken respectively on lines 2-2 and 3-3 of FIGURE 1;
FIGURE 4 is a fragmentary view looking in a direction of the arrow 4 in FIGURE 1;
FIGURE 5 is a fragmentary view showing steps in the methodology of the present invention;
FIGURE 6 is a fragmentary view on an enlarged scale looking in the direction of the arrow 6 in FIGURE 1
FIGURE 7 is a fragmentary plan view of the invention panel structure;
FIGURE 8 is cross-sectional view taken on lines 8-8 of FIGURE 6;
FIGURE 9 is an exploded view of the invention panel structure;
FIGURE 10 is a perspective view of a pallet according to the invention;
FIGURES 11 and 12 are cross-sectional views taken respectively on lines 11-11 and 12-12 of FIGURE 10;
FIGURE 13 is a perspective view of a double faced pallet according to the invention;
FIGURE 14 is a fragmentary side view of the pallet of Figure 13;
FIGURE 15 is a cross-sectional view taken on line 15-15 of Figure 15;
FIGURE 16 is a perspective view of another double faced pallet according to the invention;
FIGURE 17 is a fragmentary side view of the pallet of Figure 16;
FIGURE 18 is a cross-sectional view taken on line 18-18 of Figure 16;
FIGURE 19 is a fragmentary top view of the pallet of Figure 16;
FIGURE 20 is a perspective view of a further panel structure according to the invention;
FIGURES 21 and 22 are cross sectional views taken respectively on lines 21-21 and 22-22 of Figure 20;
FIGURE 23 is a fragmentary view looking in the direction of the arrow 23 in Figure 10;
FIGURE 24 is a fragmentary view on an enlarged scale looking in the direction of the arrow 24 in Figure 10;
FIGURE 25 is an exploded view of the panel structure of Figure 20;
FIGURE 26 is a fragmentary plan view of a modification of the panel structure of Figure 20;
FIGURE 27 is a cross sectional view taken on line 27-27 of Figure 26;
FIGURE 28 is a fragmentary plan view of a further modification of the panel construction of Figure 20;
FIGURE 29 is a cross sectional view taken on line 29-29 of Figure 28; and
FIGURE 30 is a cross sectional view taken on line 30-30 of Figure 29.

### Detailed Description of the Preferred Embodiments

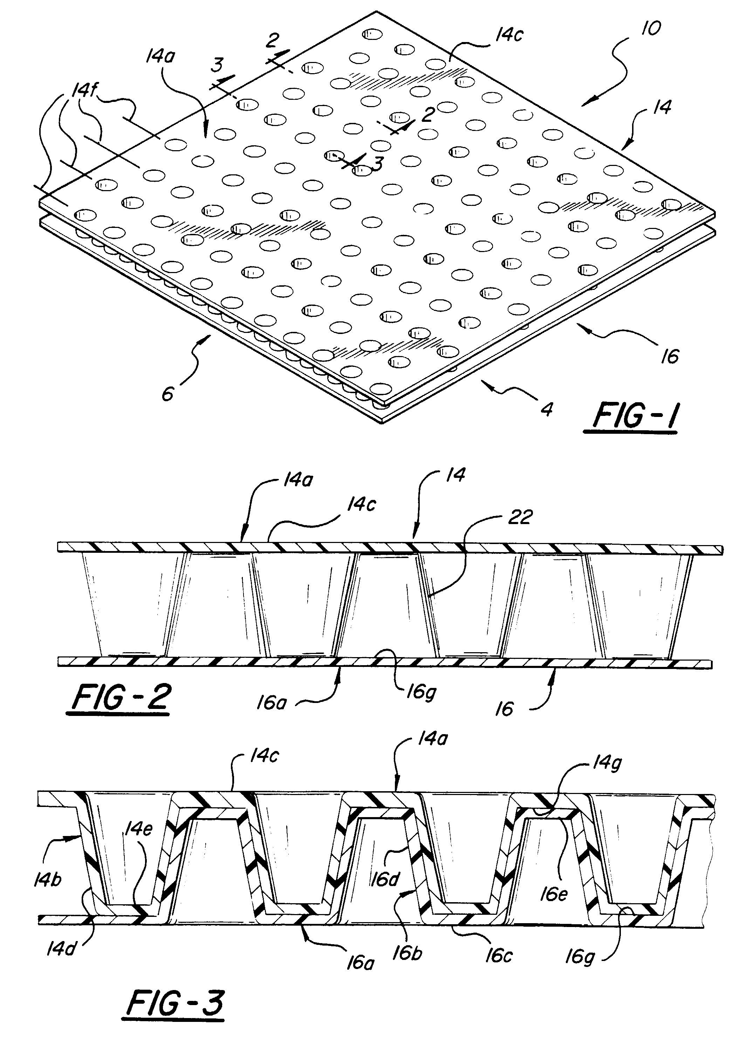

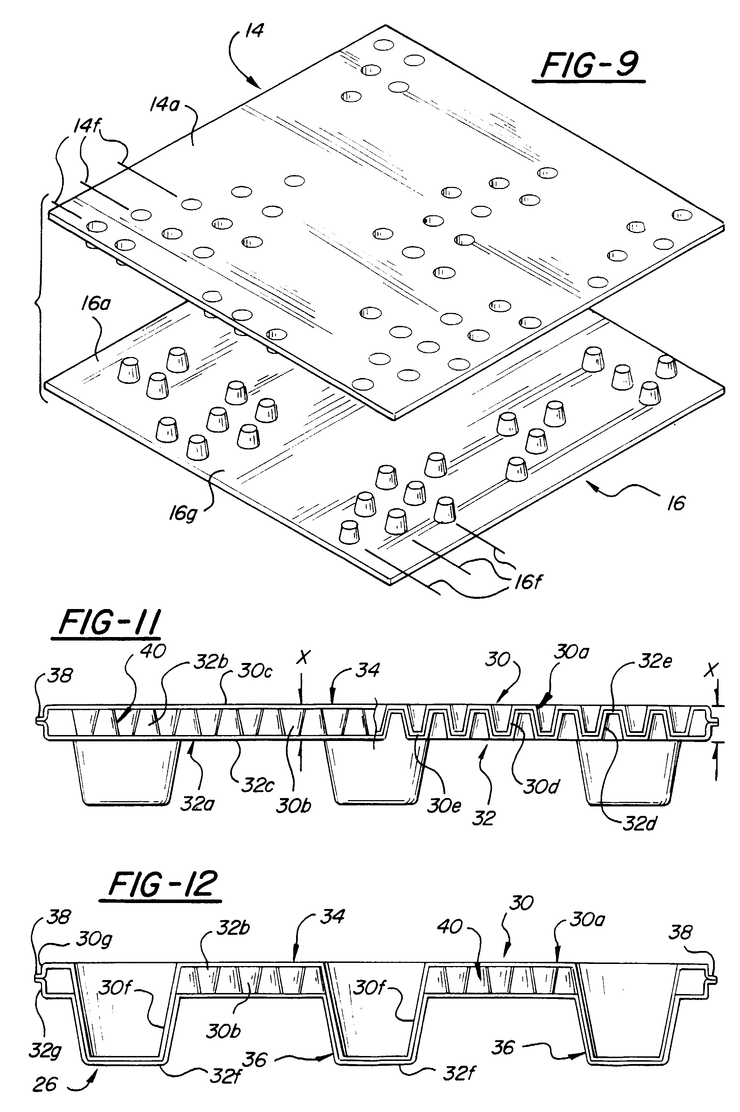

In broad overview, the panel structure 10 seen in Figures 1-9 and the pallet seen in Figures 10-12 are both preferably formed in a vacuum forming process preferably embodying a plastic twin sheet construction employing two polyethylene sheets or skins which are selectively thermoformed and are then fused or knitted together at various points, while still in a heated state, to form the panel structure or the pallet.

Panel structure 10 is formed from a thermoformed, selectively configured upper sheet 14 and a thermoformed, selectively configured lower sheet 16. In the disclosed panel structure, each sheet 14 and 16 has a generally rectangular configuration but the configuration of the sheets will of course vary depending upon the desired configuration of the final panel structure.

Sheet 14 is formed in known manner in coaction with an upper vacuum forming mold 18 and sheet 16 is formed in known manner in coaction with a lower vacuum forming mold 20. Specifically, sheet 14 is heated, positioned in underlying relation to the mold 18, and then sucked upwardly into conformance with the surface 18a of the mold 18 utilizing vacuum ports 18b. Similarly, sheet 16 is heated, positioned in overlying relation to mold 20, and sucked downwardly into conformance with the surface 20a of mold 20 utilizing vacuum ports 20b. After the sheets have been thus thermoformed, and with the sheets still in a heated flowable state, the molds 18 and 20 are moved together to selectively fuse the upper sheet to the lower sheet.

Molds 18 and 20 are configured such that, following the thermoforming operation, each sheet includes a generally planar main body portion and a plurality of spaced hollow bosses extending from the planar main body portion.

Specifically, upper sheet 14 is thermoformed to include a generally planar main body portion 14a and a plurality of spaced hollow bosses 14b opening in the upper or outer surface 14c of the main body portion and including downwardly tapering conical annular side wall portions 14d extending downwardly from the main body portion and terminating in inner or bottom circular wall portions 14e. Bosses 14b are arranged in rows 14f with each row staggered with respect to the next adjacent row so that the bosses in one row are positioned generally between adjacent bosses in adjacent rows.

Similarly, lower sheet 16 is thermoformed to include a main body portion 16a and a plurality of spaced hollow bosses 16b opening in the lower or outer surface 16c of the main body portion and including upwardly tapering conical annular wall portions 16d extending upwardly from the main body portion 16a and terminating in upper or inner circular wall portions 16e. Bosses 16b are arranged in rows 16f with each row staggered with respect to the next adjacent row so that a boss in one row is positioned between adjacent bosses in an adjacent row.

Rows 16f are also staggered with respect to the corresponding rows 14f in the upper sheet so that when the sheets 14 and 16 are fitted together to form the panel structure, each boss 14b of upper sheet 14 fits interdigitally between a pair of adjacent bosses 16b of the lower sheet and each boss 16b of the lower sheet fits interdigitally between a pair of adjacent bosses 14b of the upper sheet. The downward angle or taper of the bosses 14b is complementary to the upward angle or taper of the bosses 16b so that when the bosses are fitted or meshed together, and as best seen in Figure 2, the bosses fit together along angular interfaces 22.

Since the sheets are fitted together while still in a heated, flowable state, the bosses are fused together along their angled interfaces 22. Further, since the bosses 14b and 16b have equal vertical extents or heights, the respective walls 14e and 16e of the bosses are fused to the respective confronting faces of the main body portions of the respective sheets. Specifically, the lower or inner wall 14e of an upper sheet boss 14b is fused to the upper surface 16g of lower sheet main body portion 16a at a location between a respective pair of lower sheet bosses 16b, and the upper or inner wall 16e of a lower sheet boss 16b is fused to the lower or inner surface 14g of upper sheet main body portion 14a between a respective pair of upper sheet bosses 14b.

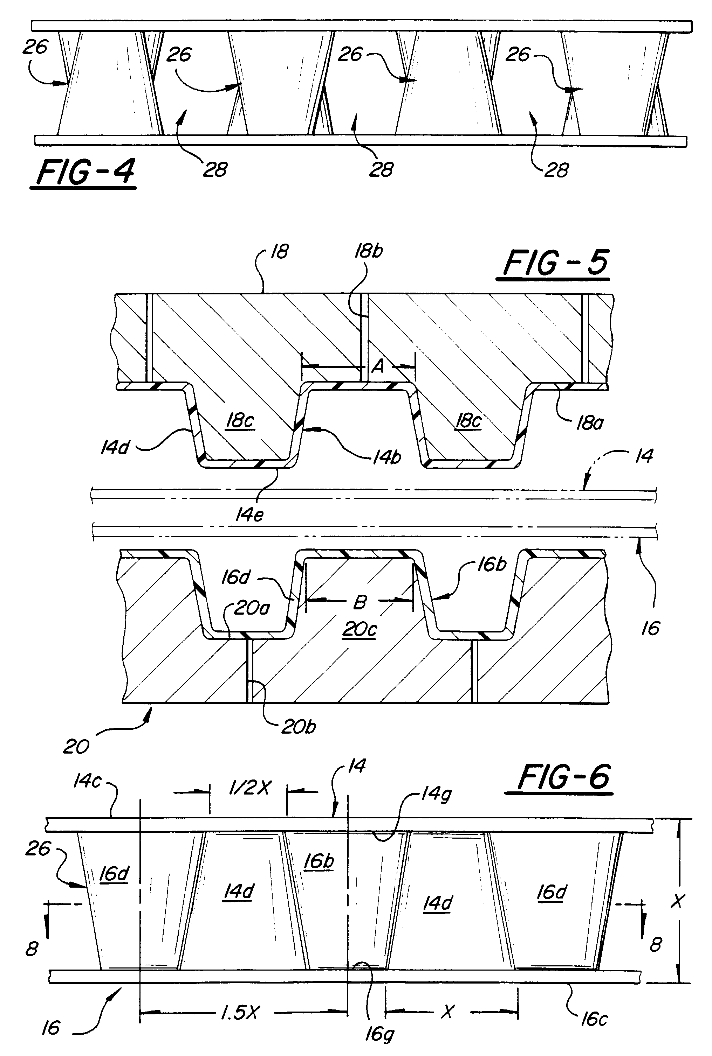

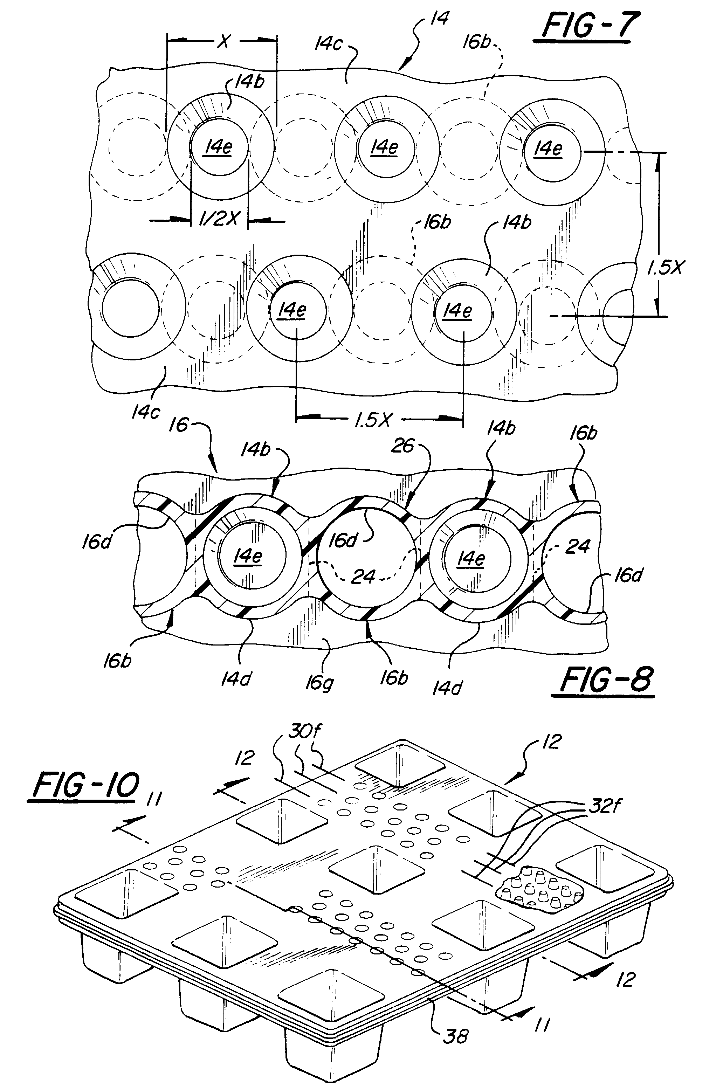

As best seen in Figure 5, the sheets are configured such that bosses 14b and 16b have identical configuration and further such that the dimension A measured across the valley or root of the upper mold 18 between adjacent mold boss configurations 18c is identical to the dimension B measured across the top of the boss configuration 20c of the lower mold. This configuring of the upper and lower molds provides an interference or overlapping fit as between the upper and lower bosses as the sheets are pressed together so that the upper and lower bosses, rather than merely fusing along a line of angular contact, fuse along a relatively wide area of contact as seen by the dashed lines 24 in Figure 8. As best seen in Figure 8, the fused together bosses coact to form a plurality of rigid column structures 26 between the upper and lower sheets corresponding in arrangement and orientation to the boss rows 14f and 16f of the upper and lower sheets. As best seen in Figure 4, spaces or openings 28, running the entire width of the panel structure, are formed between rigid column structures 26.

Whereas the dimensions of the individual bosses, the spacing between successive bosses in each row, and the spacing between rows will vary depending upon the particular application for which the panel structure is intended, certain dimensional relationships as between the boss configurations, boss spacings, and row spacings have been found to be particularly advantageous in terms of producing an extremely strong panel structure for a given amount of plastic material. Specifically, and as best seen in Figures 6 and 7, a particularly strong panel structure is provided by relating the boss and other dimensions to the overall thickness X of the panel structure such that the major dimension of each boss (i.e., the dimension of the boss as it opens in the associated main body structure) is equal to X; the minor dimension of each boss (i.e., the dimension of the boss at its inner wall) is equal to one half X; the distance centerline to centerline between successive bosses in each row is equal to 1.5X; and the distance centerline to centerline between adjacent rows is equal to 1.5X. This specific dimensional interrelationship has been found to allow the sheets to draw smoothly, and without excessive thinning, over the respective molds to provide a final panel structure that is extremely strong and rigid in comparison to the amount of plastic material utilized.

The pallet 12 seen in Figures 10-12 utilizes a panel structure corresponding to the panel structure 10, and is formed in a manner generally similar to the formation of panel structure 10, except that the upper and lower sheets of the twin sheet pallet are further selectively thermoformed to provide spaced legs extending downwardly from the main body or platform structure of the pallet to position the platform structure in upwardly spaced relation to a support surface on which the legs are positioned.

Specifically, pallet 12 includes upper and lower plastic sheets 30 and 32; upper sheet 30 includes a main body portion 30a and a plurality of spaced hollow bosses 30b opening in the upper surface 30c of the main body portion and including tapered conical annular side wall portions 30d extending downwardly from the upper sheet main body portion and terminating in inner or bottom circular wall portions 30e; lower sheet 32 includes a main body portion 32a and a plurality of spaced hollow bosses 32b opening in the lower surface 32c of the main body portion and including tapered conical annular side wall portions 32d extending upwardly from the lower sheet main body portion and terminating in upper or inner circular wall portions 32e; the bosses in the upper sheet are arranged in rows 30f with each row staggered with respect to the next adjacent row so that a boss in one row is positioned between adjacent bosses in the next adjacent row; the bosses in the lower sheet are arranged in rows 32f that are staggered with respect to each adjacent row in the lower sheet and are also staggered with respect to the corresponding rows in the upper sheet so that the upper and lower bosses fit together in intermeshing fashion in the manner described with respect to the panel structure 10; the intermeshed and fused together upper and lower sheets coact to define a platform structure 34 of the pallet including rigid column structures 40 extending across the platform structure; and the upper and lower sheets are further selectively thermoformed to define downwardly extending leg portions 30f and 32f which are fused together in nesting relationship as the sheets are brought together to define a plurality of spaced legs 36 extending downwardly from platform structure 34 to position the platform structure in upwardly spaced relation to a support surface on which the pallet is positioned. For example, for a nine-legged pallet, the upper and lower sheets are configured to define four corner legs 36, a further leg 36 along each side edge of the pallet between corner legs, and a central leg positioned at the proximate midpoint of the pallet. The upper and lower sheets may be further configured to define edge portions 30g and 32g which are fused together as the sheets are brought together to form a peripheral bead 38 extending around the periphery of the pallet and sealing off the interior of the platform section 34.

As with the panel structure, the relative dimensions of the bosses, the spacing between bosses in a given row, and the spacing between adjacent rows may vary depending upon the particular application for which the pallet is intended but, also as with the panel structure 10, a particularly strong pallet structure for a given amount of plastic material has been found to result from a pallet in which the various parameters are related to the thickness X of the platform structure 34 such that each boss has a major dimension equal to X and a minor dimension equal to one half X; the distance between centerlines of successive bosses in each row is equal to 1.5X; and the distance between centerlines of adjacent rows is equal to 1.5X. As previously noted with respect to panel structure 10, these specific parameters have been found to provide a smooth draw or flow behavior of the plastic sheets as the plastic material is drawn over the bosses of the molds with minimum thinning of the plastic material even in the deep draw sections, and has been found to produce an extremely rigid pallet for a given amount of plastic material employed to form the pallet.

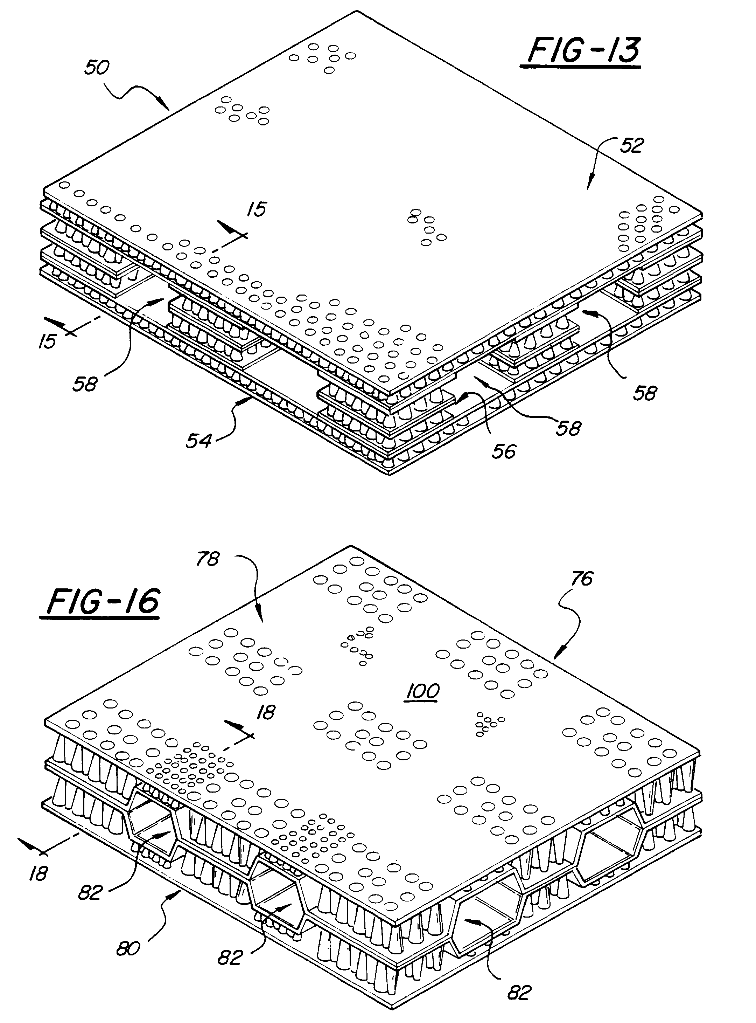

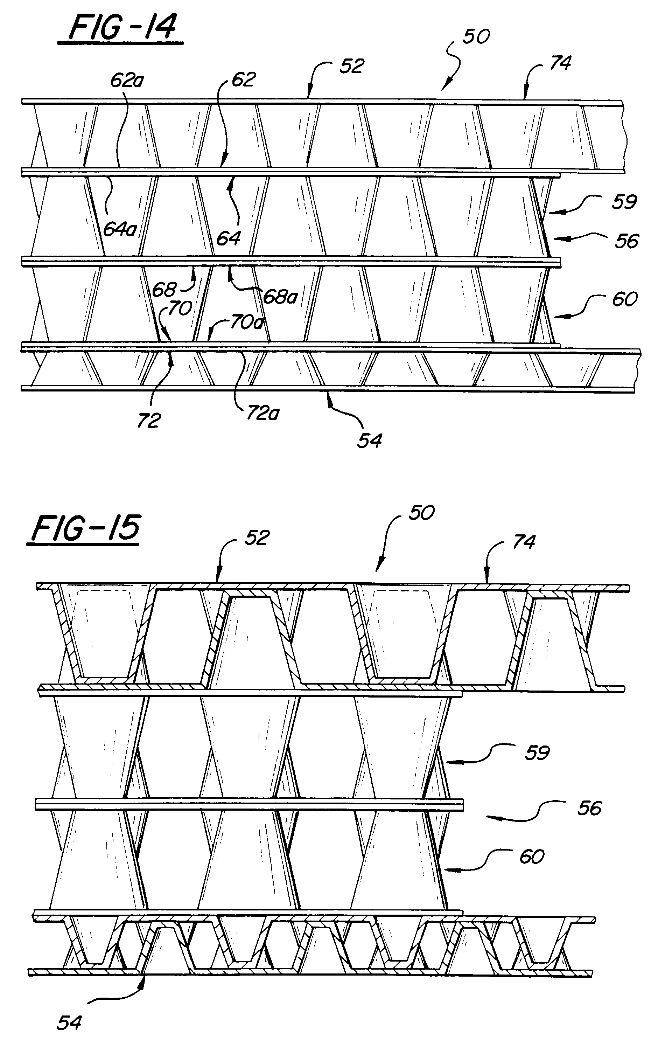

The double faced pallet 50 seen in Figures 13-15 utilizes a panel structure according to the invention to form the upper or platform section of the pallet and a further panel structure according to the invention to form a flat lower base portion for the pallet on which the pallet may rest, and is further configured to define pillar structures interconnecting the upper and lower panel structures and also embodying the constructional features of the panel structure of the invention.

Specifically, the double faced pallet 50 in Figures 13-15 includes an upper panel structure 52 corresponding to the panel structure 10 of Figure 1, a lower panel structure 54 corresponding to the panel lo of Figure 1 but having a lesser thickness than the panel structure 52, and a plurality of pillar structures 56 (for example nine, including four corner pillar structures, a pillar structure intermediate each pair of corner pillar structures, and a central pillar structure) interconnecting the upper and lower panel structures and coacting to define forklift entry passages 58 to allow entry of a forklift truck from any side of the pallet.

Each pillar structure 56 is also formed utilizing panel structures according to the invention. Specifically, each pillar structure 56 includes stacked upper and lower panel structures 59 and 60 with each upper and lower panel structure corresponding to the construction of the panel of Figure 1 but having reduced dimensions as compared to the upper and lower panel structures 52 and 54 so as to provide the prescribed nine spaced pillar structures defining forklift corridors 58 therebetween. As shown, the panel structures 59 and 60 constituting each pillar 56 may have a thickness corresponding to the upper panel structure 52 and the lower panel structure 54 may have a thickness approximately 1/2 the thickness of the panel structures 52, 59 and 60.

The main body portion 62a of the lower sheet 62 of the upper panel structure 52 is fused to the main body portion 64a of the upper sheet 64 of the panel structure 59; the main body portion 66a of the lower sheet 66 of panel structure 59 is fused to the main body portion 68a of the upper sheet 68 of the panel structure 60; and the main body portion 70a of the lower sheet 70 of the panel structure 60 is fused to the main body portion 72a of the upper sheet 72 of the panel structure 54 so that each set of intermediate panel structures 59 and 60 coact with selected portions of the upper and lower panel structures 52 and 54 to form a rigid column interconnecting the upper and lower panel structures and so that the panel structures 56 in combination coact to rigidly interconnect the upper and lower panel structures at nine spaced locations corresponding to the usual leg locations in a standard nine-legged pallet. In the finished pallet, lower panel structure 54 defines a base structure on which the pallet may rest, upper panel structure 52 defines a platform structure defining an upwardly facing load receiving surface 74, and the pallet may be selectively moved utilizing forklifts positioned in the passages 58.

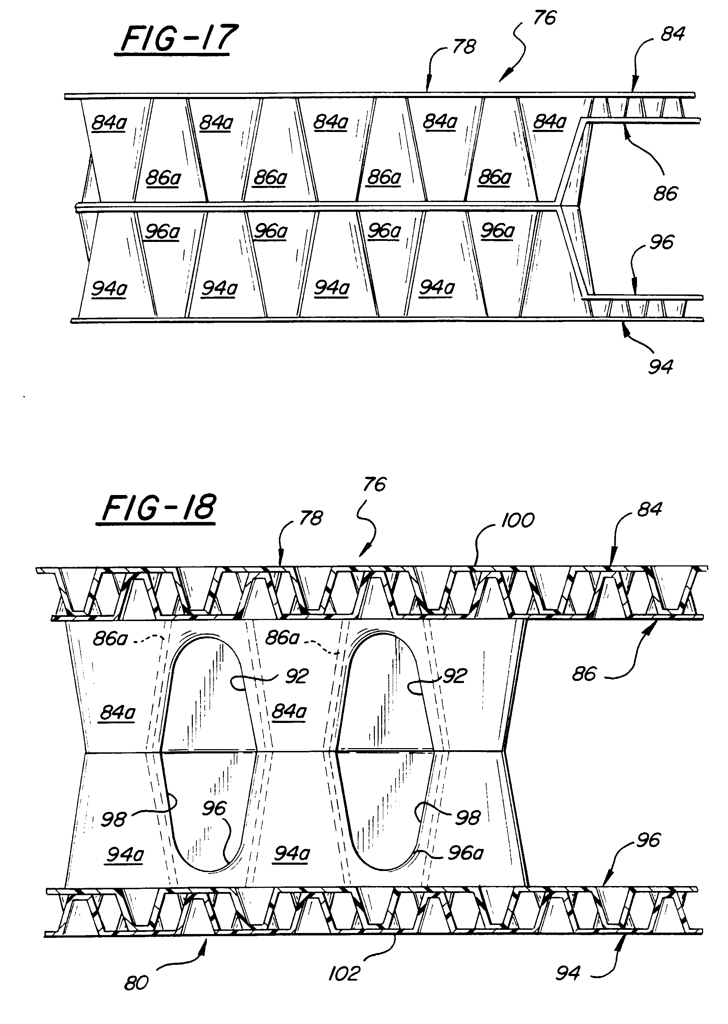

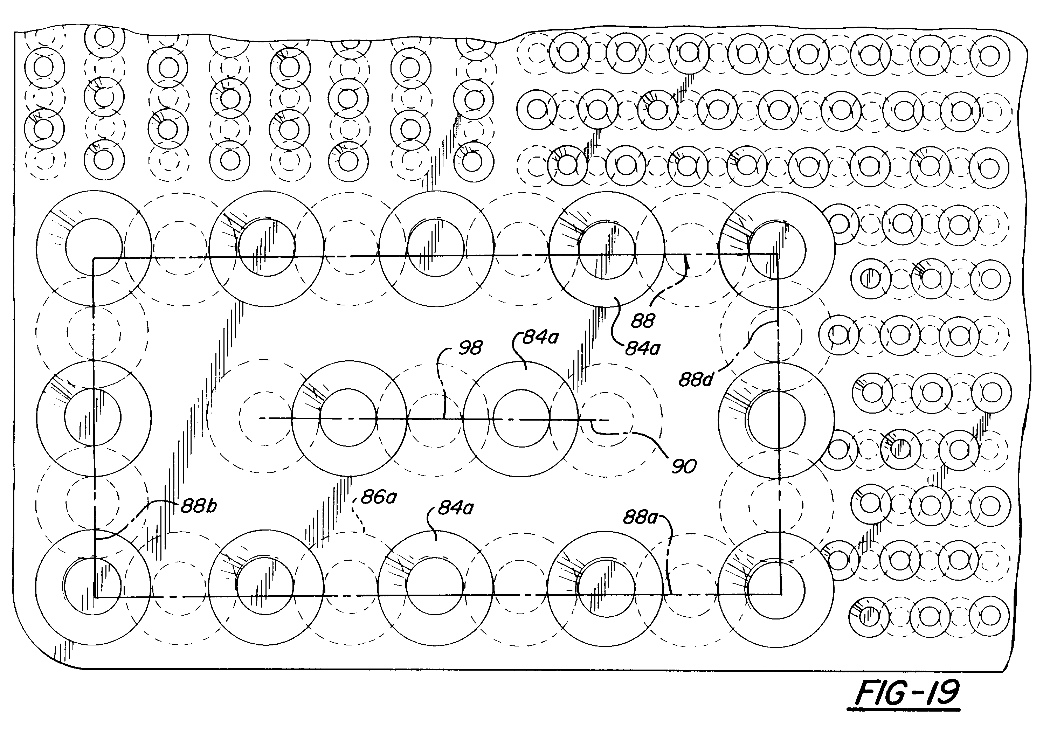

The pallet 76 shown in Figures 16-19 is also a double faced pallet utilizing the panel structure of the invention. Specifically, the pallet 76 of Figures 16-19 is formed of a twin sheet upper deck structure 78 and a twin sheet lower deck structure or base 80. Deck structures 78 and 80 are identical and the pallet is formed by inverting lower deck structure 80 relative to upper deck structure 78 and fusing the decks together at their interfaces to form forklift passageways 82. Deck 78 is formed of upper and lower thermoformed plastic sheets 84 and 86. Sheets 84 and 86 are formed over the majority of their surface areas (with the exception of the areas corresponding to the legs or columns of the pallet) in a manner to duplicate the structure of the panel of Figure 1 with the upper and lower sheets providing downwardly extending and upwardly extending intermeshing bosses to provide rigid columns extending the width of the pallet in the manner described with respect to the panel structure of Figure 1. As best seen in Figure 19, the columns formed by the intermeshing upwardly and downwardly extending bosses on the upper and lower sheets may be arranged to run from left to right of the pallet as viewed in Figure 16 except for border portions along the left and right borders of the pallet as viewed in Figure 16 where the columns may be arranged to run from bottom to top of the pallet.

The upper and lower sheets 84 and 86 also provide downwardly and upwardly extending intermeshing bosses in the regions corresponding to the legs or columns of the pallet but the bosses in these regions are much larger than the bosses in the main deck region of the upper deck section 76. Specifically, upper sheet 84 is configured in each leg region to provide a plurality of large downwardly extending upwardly opening bosses 84a having side walls meshingly coacting with and fused to the side walls of large upwardly extending downwardly opening bosses 86a of the lower sheet 86. As best seen in Figure 19, the intermeshing, fused together bosses in each leg or column section of the pallet are arranged in a rectangular configuration so that the upwardly and downwardly extending bosses coact to form a rectangular wall or column represented by the dash line 88 in Figure 19 with further bosses provided within the wall 88 to provide a linear column or wall 98 encircled by the rectangular column or wall 88. The wall 88 is solid along its outer peripheral sides 88a and 88b but, as best seen in Figure 18, defines openings 92 between the bosses along the inner wall portion 88c and 88d. Openings 92 do not extend completely through the wall portion 88c and 88d but rather simply open up in the interior of the associated upwardly extending boss 86a.

As indicated, lower deck 80 is identical to upper deck 78 and comprises a twin sheet structure including a lower sheet 94 coacting with an upper sheet 96 to define the main body intermeshing boss panel structure of the deck with enlarged upwardly and downwardly extending bosses 94a and 96a provided in the leg or column regions of the pallet in the pattern shown in Figure 19 so that, as with the upper deck 78, each leg or column section of the lower deck defines a rectangular wall or column with a linear column positioned within the rectangular column and with openings 98 in the downwardly extending bosses forming the inner walls of the rectangular column opening into the interior of the respective boss in the manner described with respect to the openings 92. The completed pallet defines a load receiving surface 100 at the upper face of the upper deck and defines a flat lower surface 102 at the lower face of the lower deck to support the pallet.

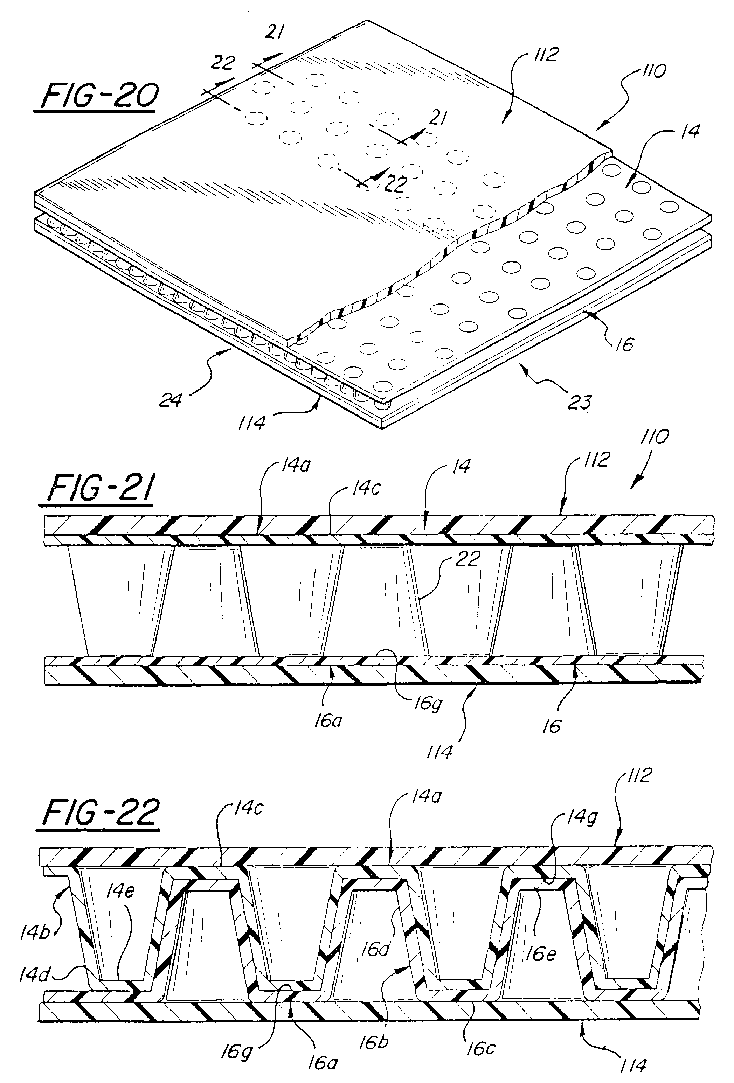

The panel structure 110 of Figures 20-25 is formed from a thermoformed and selectively configured sheet 14, a thermoformed and selectively configured sheet 16, a flat cover sheet 112, and a flat lower base sheet 114.

Sheets 14 and 16 correspond to sheets 14 and 16 of the Figures 1-9 embodiment and, as best seen in Figures 21, 22, 23, and 24, fit together in complementary interdigitated fashion with the lower end 14e of each downwardly extending boss 14b fused to the upper face 16g of the main body portion 16a of sheet 16 at a location between a respective pair of upwardly extending bosses 16d; the upper end of each upwardly extending boss 16f fused to the lower face 14g of the main body portion 14a of sheet 14 between a respective pair of downwardly extending bosses 14b; and the downwardly extending and upwardly extending bosses 14b/16b fused together at their complementary interfacing annular side walls 14d/16d to form a plurality of rigid column structures between the sheet 14 and the sheet 16 corresponding in arrangement and orientation to the boss rows 14f and 16f of the sheets 14 and 16.

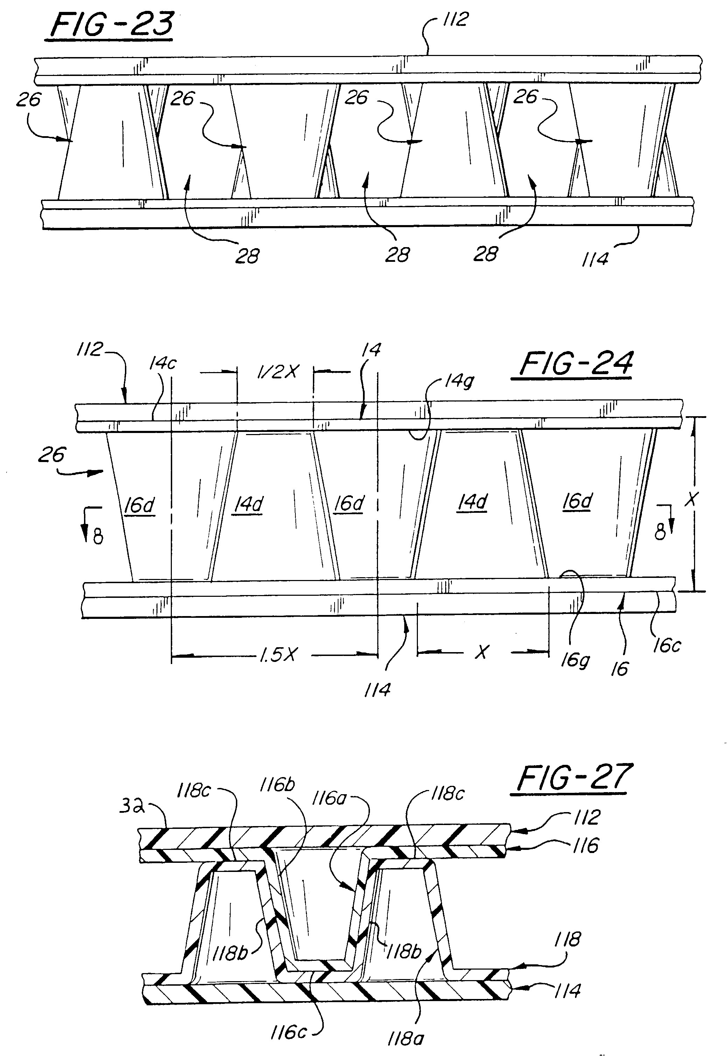

As with the Figures 1-9 embodiment, and as best seen in Figure 23, spaces or openings 28, running the entire width of the sheets, are formed between the rigid column structures 26.

Flat upper cover sheet 112 is formed of the same plastic material as sheets 14 and 16 and is positioned over and fused to the upper face of the main body portion 14c of sheet 14 in overlying relation to the openings in the upper face of sheet 14 provided by bosses 14b. Upper cover sheet 112 is coextensive in length and width to sheets 14 and 16 but preferably has a thickness that is significantly greater than the thickness of the sheets 14 and 16. For example, sheets 14 and 16 may have a nominal thickness of 20 thousandths of an inch and cover sheet 112 may have a nominal thickness of 30 thousandths of an inch.

Flat lower base sheet 114 is positioned under and fused to the lower face 16c of the main body portion 16a of sheet 16 in underlying relation to the openings in the lower face of sheet 16 provided by bosses 16b. Sheet 114 is coextensive in length and width to sheets 14, 16 and 112 and preferably has a thickness greater than the thickness of sheets 14 and 16 and generally corresponding to the thickness of upper cover sheet 112.

Whereas the upper and lower bosses in the previously described embodiments are illustrated and described as arranged in rows with the bosses in the rows of sheet 14 offset with respect to the bosses in the rows of sheet 16 so that the downwardly extending bosses of the sheet 14 may fit interdigitally and complementarily between the bosses in the rows of the sheet 16 to form a plurality of rigid column structures between the sheets 14 and 16, the invention may also be carried out using other boss patterns in the sheets 14 and 16.

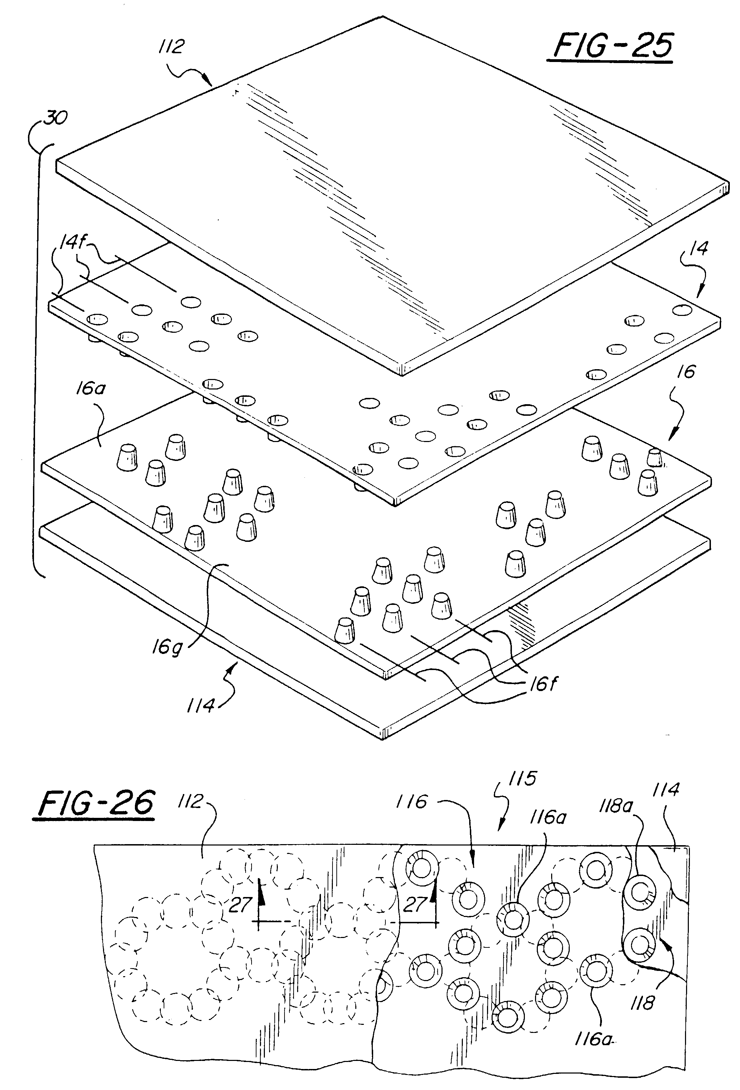

One such alternate boss pattern is seen in Figure 26 wherein the panel structure 115 includes a flat, upper cover sheet 112, a flat lower base sheet 114, an upper intermediate sheet 116, and a lower intermediate sheet 118.

Intermediate sheets 116 and 118 have bosses 116a and 118a arranged in corresponding, complementary patterns with spaces between the bosses in each pattern so that the bosses of upper intermediate sheet 116 may fit interdigitally and complementarily with the bosses on the lower intermediate sheet. Specifically, the upper intermediate sheet 116 and lower intermediate sheet 118 each have their bosses arranged in a hexagonal pattern with the hexagonal pattern of the downwardly extending bosses 116a of the upper intermediate sheet rotated with respect to the hexagonal pattern of the upwardly extending bosses 118a of the lower intermediate sheet by 45° so that the bosses 116a may fit interdigitally and complementarily between adjacent bosses 118a on the lower intermediate sheet and so that the annular side wall portions 116b of the bosses 116a may fuse with the annular side wall portions 118b of the bosses 118a with the lower ends 116c of the bosses 116a fused to the upper face of the main body portion of the lower sheet 118 and the upper ends 118c of the bosses 118a fused to the lower face of the upper intermediate sheet 116. As with the Figures 20-25 embodiment, the flat upper and lower sheets 112 and 114 preferably have a thickness greater than the thickness of the intermediate sheets 116 and 118.

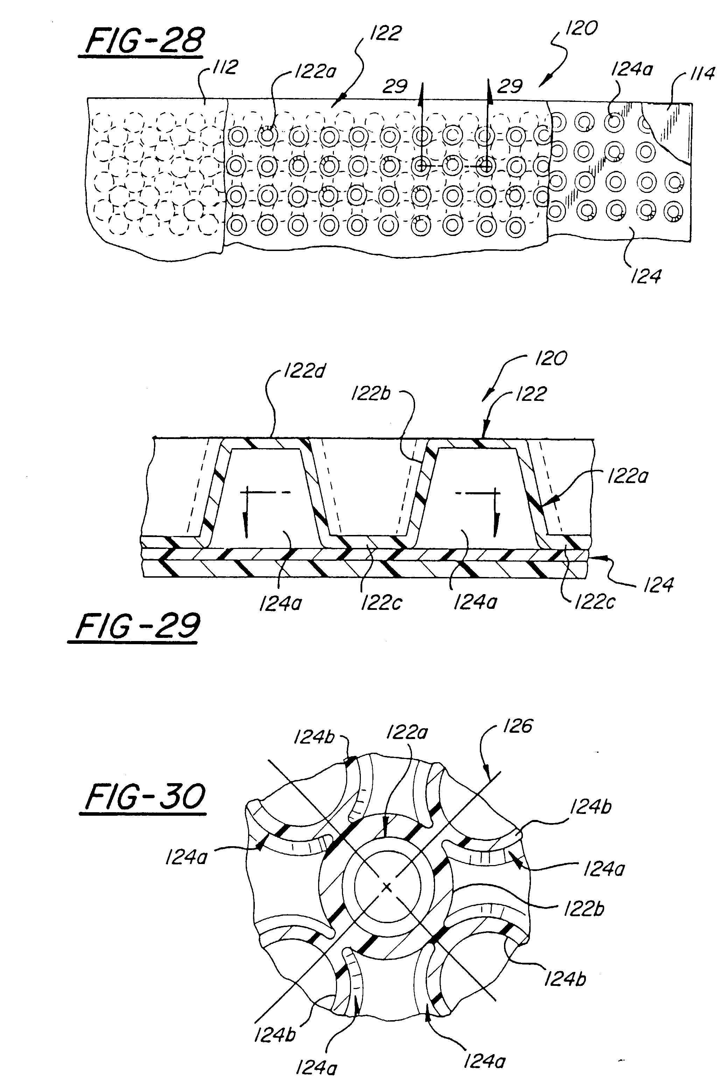

In the panel structure 120 of Figures 28-30, the upper intermediate sheet 122 has a plurality of rows of downwardly extending bosses 122a and the lower intermediate sheet 124 has a plurality of rows of upwardly extending bosses 124a arranged in a pattern that is complementary with respect to the pattern of downwardly extending bosses 122a. Specifically, the rows of bosses 124a are laterally offset with respect to the rows of bosses 122a and the bosses 124a in a given row of bosses 124a are longitudinally offset with respect to the bosses 122a in the adjacent row of bosses 122a so that, as best seen in Figure 30, each downwardly extending boss 122a is complementarily positioned between four upwardly extending bosses 124a. The longitudinal and lateral spacings of the rows and the dimensions of the bosses are chosen such that the annular side wall portion 122b of each downwardly extending boss 122a is fused to the annular side wall portion 124b of each upstanding boss 124a to form a rigid X configuration 126 centered on each downwardly extending boss 122b (or each upwardly extending boss 124a) with the lower ends 122c of the downwardly extending bosses 122a fused to the upper face of the main body portion 124c of the lower intermediate sheet 124 and the upper ends 124d of the upwardly extending bosses 124a fused to the lower face of the main body portion 122a of the upper intermediate sheet 122.

The invention will be see to provide a panel structure that is lightweight, strong, durable and maintenance-free, that provides all-weather performance, and that is relatively inexpensive. The invention panel structure is thereby ideally suited for a myriad of construction and fabricating applications.

More specifically, pallets constructed in accordance with the invention have been found to have superior structural strength as compared to prior art twin sheet pallets and even as compared to applicant's improved prior art twin sheet pallet shown in United States Patent No. 4,879,956. Specifically, as compared to prior art twin sheet pallets, the invention design enables the invention pallet to be constructed utilizing significantly less plastic material than the prior art twin sheet designs while providing the same structural strength. Since the plastic material constitutes a significant part of the cost of a twin sheet pallet, a significant reduction in the amount of material required to meet any particular structural requirement enables the entire pallet to be manufactured at a cost significantly less than pallets of the described prior art twin sheet design.

With specific reference to the panel structures 112, 115, and 120 shown in Figures 20-30, forming the upper and lower portions of the panel structure from sheets that are separate from the sheets forming the intermediate portion of the panel structure allows the thickness of the upper and lower sheets to be determined independently of the thickness of the sheets forming the intermediate portion so that, for example, and as disclosed, the upper and lower sheets may have a greater thickness than the thickness of the sheets forming the intermediate portion with the thicknesses of the individual sheets, in any event, chosen independently of each other and with a view to providing a final desired panel structure thickness, weight, strength, and cost.

Whereas the particular plastic material utilized to form the invention pallet is not critical, it has been found that excellent results may be obtained by the use of a high density polyethylene having a density of approximately 0.950 grams per cubic centimeter.

Whereas preferred embodiments of the invention have been illustrated and described in detail, it will be apparent that various changes may be made in the disclosed embodiments without departing from the scope or spirit of the invention. For example, although the bosses have been illustrated and described as having a circular cross-sectional configuration, other cross sectional configurations such as, but not limited to, rectangular or oval configurations, may be employed and the term annular as used in the claims to describe the side walls of the bosses will be understood to include any closed loop cross-sectional configuration. Further, although the alternate boss patterns of Figures 26-30 are illustrated in association with panel structures including flat upper and lower sheets and thermoformed intermediate sheets, it will be apparent that the alternate boss patterns of Figures 26-30 may also be employed in association with any of the panel and pallet structures of Figures 1-25.

## Claims

1. A twin sheet panel structure (10,52,78,80,112,115,120) comprising a first plastic sheet (14) including a planar main body portion (14a) having inner and outer surfaces (14g,14c) and a second plastic sheet (16) positioned in parallel spaced relation to said first plastic sheet and including a main body portion (16a) having inner and outer surfaces (16g,16c), the first sheet further including a plurality of spaced hollow bosses (14b) opening in the outer surface of the first sheet main body portion and including annular side wall portions (14d) extending inwardly from said first sheet main body portion and terminating in inner wall portions (14e), the second plastic sheet further including a plurality of spaced hollow bosses (16b) opening in the outer surface of the second sheet main body portion and including annular wall portions (16d) extending inwardly from said second sheet main body portion and terminating in inner wall portions (16a), characterized in that the annular side wall portions of some of said first sheet bosses are fused to the annular side wall portions of some of said second sheet bosses.

2. A panel structure according to claim 1, wherein at least some of said inwardly extending bosses on said first sheet are positioned in spaces between adjacent inwardly extending bosses on said second sheet.

3. A panel structure according to claim 1, wherein the fused together first sheet bosses and second sheet bosses are arranged in parallel rows (14f,16f) with each row including alternate first sheet bosses and second sheet bosses.

4. A panel structure according to claim 1, wherein the annular side wall portions of said first and second sheet bosses taper inwardly in complementary fashion so as to define angled interfaces (22) therebetween and said side wall portions are fused together at their angled interfaces.

5. A panel structure according to claim 1, wherein the inner wall portions of said first sheet bosses are fused in spaced relation to the inner surface of the main body portion of said second sheet and the inner wall portions of said second sheet bosses are fused in spaced relation to the inner surface of the main body portion of said first sheet.

6. A panel structure (115) according to claim 1, wherein the inwardly extending bosses of the first sheet (116) are arranged in hexagonal patterns and the inwardly extending bosses of the second sheet (114) are arranged in hexagonal patterns that are complementary to the hexagonal patterns of the inwardly extending bosses of the first sheet and the bosses of a given hexagonal boss pattern of the first sheet fit interdigitally with respect to the bosses of a corresponding hexagonal boss pattern of the second sheet.

7. A panel structure according to claim 1, wherein:
the bosses are arranged in parallel rows (14f,16f); and
the boss rows of the first sheet are offset laterally and longitudinally with respect to the boss rows of the second sheet so that each boss extending in a given direction may be positioned between four bosses extending in the opposite direction.

8. A panel structure (10) according to any of claims 1 to 7, wherein the panel structure defines the platform structure of a pallet (12,50) and the pallet further includes a plurality of spaced legs (36,56) extending downwardly from said platform structure.

9. A panel structure according to claim 8, wherein the legs are defined by further coaction of the first and second sheets.

10. A panel structure according to claim 8, wherein the legs (56) are formed of stacked leg panel structures (59,60) with each leg panel structure formed of upper and lower sheets (64,66;72,70) respectively defining upwardly and downwardly extending hollow bosses arranged in intermeshing fashion with annular side wall portions of some of the upwardly extending bosses fused to annular side wall portions of some of the downwardly extending bosses.

11. A method of forming a twin sheet plastic panel structure (10,52,78,80,112,115,120) wherein a first plastic sheet (14) is formed to include a generally planar main body portion (14a) having inner and outer surfaces (14g,14c) and a plurality of spaced hollow bosses (14b) opening in the outer surface of the main body portion and including annular side wall portions (14d) extending inwardly from the main body portion and terminating in inner wall portions (14e); and a second plastic sheet (16) is formed to include a generally planar main body portion (16a) having inner and outer surfaces (16g,16c) and a plurality of spaced hollow bosses (16b) opening in the outer surface of the second sheet main body portion and including annular side wall portions (16d) extending inwardly from the second sheet main body portion and terminating in inner wall portions (16e); characterized in that
with said sheets in a heated, flowable state, the sheets are brought together to fuse side wall portions of said first sheet bosses to side wall portions of said second sheet bosses.

12. A method according to claim 11, wherein the step of bringing the sheets together further includes fusing inner wall portions of said first sheet bosses to the inner surface of said second sheet main body portion at locations between adjacent second sheet bosses and fuse inner wall portions of said second sheet bosses to the inner surface of said first sheet main body portion at locations between adjacent second sheet bosses.

13. A method according to claim 11, wherein the bosses of said first and second sheets are arranged in generally parallel laterally extending rows (14f,16f) with the bosses in each row laterally space from each other and said step of bringing said sheets together includes positioning the bosses in a row of said first sheet in interdigital relation with respect to the bosses in a corresponding row of the second sheet so that said panel structure includes bosses arranged in parallel rows with each row including alternate first sheet bosses and second sheet bosses.

14. A method according to any of claims 11 to 13, wherein the panel structure defines the platform structure of a pallet (12,50) and wherein the method includes the first step of forming said first and second sheets so that, when brought together, they further coact to define a plurality of spaced legs (36,56) extending downwardly from the platform structure to position the platform structure in upwardly spaced relation to a support surface on which the legs are positioned.

## Patentansprüche

1. Doppeltafel-Plattenstruktur (10, 52, 78, 80, 112, 115, 120), die eine erste Plastiktafel (14), die einen planen Hauptkörperabschnitt (14a) mit Innen- und Außenflächen (14g, 14c) einschließt, und eine zweite Plastiktafel (16) umfaßt, die in einem parallelen Abstandsverhältnis zu der ersten Plastiktafel angeordnet ist und einen Hauptkörperabschnitt (16a) mit Innen- und Außenflächen (16g, 16c) einschließt, wobei die erste Tafel außerdem einen Vielzahl von mit Zwischenraum angeordneten, hohlen runden Vorsprüngen (14b) einschließt, die sich in der Außenfläche des Hauptkörperabschnitts der ersten Tafel öffnen und ringförmige Seitenwandabschnitte (14d) einschließen, die von dem Hauptkörperabschnitt der ersten Tafel nach innen gerichtet verlaufen und in inneren Wandabschnitten (14e) enden, wobei die zweite Plastiktafel außerdem eine Vielzahl von mit Zwischenraum angeordneten, hohlen runden Vorsprüngen (16b) einschließt, die sich in der Außenfläche des Hauptkörperabschnitts der zweiten Tafel öffnen und ringförmige Wandabschnitte (16d) einschließen, die von dem Hauptkörperabschnitt der zweiten Tafel nach innen gerichtet verlaufen und in inneren Wandabschnitten (16a) enden, dadurch gekennzeichnet, daß die ringförmigen Seitenwandabschnitte einiger der runden Vorsprünge der ersten Tafel mit den ringförmigen Seitenwandabschnitten einiger der runden Vorsprünge der zweiten Tafel verschmolzen werden.

2. Plattenstruktur nach Anspruch 1, bei der wenigstens einige der nach innen gerichtet verlaufenden runden Vorsprünge auf der ersten Tafel in Räumen zwischen angrenzenden, nach innen gerichtet verlaufenden runden Vorsprüngen auf der zweiten Tafel angeordnet sind.

3. Plattenstruktur nach Anspruch 1, bei der die miteinander verschmolzenen runden Vorsprünge der ersten Tafel und runden Vorsprünge der zweiten Tafel in parallelen Reihen (14f, 16f) angeordnet sind, wobei jede Reihe abwechselnd runde Vorsprünge der ersten Tafel und runde Vorsprünge der zweiten Tafel einschließt.

4. Plattenstruktur nach Anspruch 1, bei der die ringförmigen Seitenwandabschnitte der runden Vorsprünge der ersten und zweiten Tafel auf komplementäre Weise konisch nach innen gerichtet verlaufen, um zwischen diesen schräge Grenzflächen (22) zu bilden, und die Seitenwandabschnitte an ihren schrägen Grenzflächen miteinander verschmolzen sind.

5. Plattenstruktur nach Anspruch 1, bei der die Innenwandabschnitte der runden Vorsprünge der ersten Tafel in einem Abstandsverhältnis mit der Innenfläche des Hauptkörperabschnitts der zweiten Tafel verschmolzen werden und die Innenwandabschnitte der runden Vorsprünge der zweiten Tafel in einem Abstandsverhältnis mit der Innenfläche des Hauptkörperabschnitts der ersten Tafel verschmolzen werden.

6. Plattenstruktur (115) nach Anspruch 1, bei der die nach innen gerichtet verlaufenden runden Vorsprünge der ersten Tafel (116) in einem Hexagonalmuster angeordnet sind und die nach innen gerichtet verlaufenden runden Vorsprünge der zweiten Tafel (114) in einem Hexagonalmuster angeordnet sind, das komplementär zum Hexagonalmuster der nach innen gerichtet verlaufenden runden Vorsprünge der ersten Tafel ist, und die runden Vorsprünge eines gegebenen hexagonalen Vorsprungsmusters der ersten Tafel doppeltkämmend zu den runden Vorsprüngen des entsprechenden hexagonalen Vorsprungsmusters der zweiten Tafel passen.

7. Plattenstruktur nach Anspruch 1, bei der:
die runden Vorsprünge in parallelen Reihen (14f, 16f) angeordnet sind; und
die Vorsprungsreihen der ersten Tafel im Verhältnis zu den Vorsprungsreihen der zweiten Tafel seitlich und in Längsrichtung versetzt sind, so daß jeder in einer gegebenen Richtung verlaufende runde Vorsprung zwischen vier runden Vorsprüngen, die in der entgegengesetzten Richtung verlaufen, positioniert werden kann.

8. Plattenstruktur (10) nach einem der Ansprüche 1 bis 7, worin die Plattenstruktur die Plattformstruktur einer Palette (12, 50) bildet und die Palette außerdem eine Vielzahl von mit Zwischenraum angeordneten Füßen (36, 56) einschließt, die sich von der Plattformstruktur nach unten erstrecken.

9. Plattenstruktur nach Anspruch 8, bei der die Füße durch das weitere Zusammenwirken der ersten und zweiten Tafel definiert sind.

10. Plattenstruktur nach Anspruch 8, bei der die Füße (56) durch aufeinandergeschichtete Fußplattenstrukturen (59, 60) gebildet werden, wobei jede Fußplattenstruktur aus oberen und unteren Tafeln (64, 66; 72, 70) gebildet wird, die nach oben bzw. nach unten verlaufende, hohle runde Vorsprünge definieren, die auf ineinandergreifende Weise mit ringförmigen Seitenwandabschnitten einiger der nach oben verlaufenden runden Vorsprünge angeordnet sind, die mit den ringförmigen Seitenwandabschnitten einiger der nach unten verlaufenden runden Vorsprünge verschmolzen sind.

11. Verfahren zur Bildung einer Doppeltafel-Plastikplattenstruktur (10, 52, 78, 80, 112, 115, 120), bei dem eine erste Plastiktafel (14) so gebildet wird, daß sie einen allgemein planen Hauptkörperabschnitt (14a) mit Innen- und Außenflächen (14g, 14c) und einer Vielzahl von mit Zwischenraum angeordneten, hohlen runden Vorsprüngen (14b) einschließt, die sich in der Außenfläche des Hauptkörperabschnitts öffnen und ringförmige Seitenwandabschnitte (14d) einschließen, die von dem Hauptkörperabschnitt nach innen gerichtet verlaufen und in inneren Wandabschnitten (14e) enden; und eine zweite Plastiktafel (16) so gebildet wird, daß sie einen allgemein planen Hauptkörperabschnitt (16a) mit Innen- und Außenflächen (16g, 16c) und einer Vielzahl von mit Zwischenraum angeordneten, hohlen runden Vorsprüngen (16b) einschließt, die sich in der Außenfläche des Hauptkörperabschnitts der zweiten Tafel öffnen und ringförmige Seitenwandabschnitte (16d) einschließen, die von dem Hauptkörperabschnitt der zweiten Tafel nach innen gerichtet verlaufen und in inneren Wandabschnitten (16a) enden; dadurch gekennzeichnet, daß
die Tafeln, wenn sich die Tafeln in einem erhitzten, fließfähigen Zustand befinden, zusammengebracht werden, um die Seitenwandabschnitte der runden Vorsprünge der ersten Tafel mit den Seitenwandabschnitten der runden Vorsprünge der zweiten Tafel zu verschmelzen.

12. Verfahren nach Anspruch 11, bei dem der Schritt des Zusammenbringens der Tafeln außerdem das Verschmelzen der inneren Wandabschnitte der runden Vorsprünge der ersten Tafel mit der Innenfläche des Hauptkörperabschnitts der zweiten Tafel an Stellen zwischen nebeneinanderliegenden runden Vorsprüngen der zweiten Tafel und das Verschmelzen der Innenwandabschnitte der runden Vorsprünge der zweiten Tafel mit der Innenfläche des Hauptkörperabschnitts der ersten Tafel an Stellen zwischen nebeneinanderliegenden runden Vorsprüngen der zweiten Tafel einschließt.

13. Verfahren nach Anspruch 11, bei dem die runden Vorsprünge der ersten und zweiten Tafel in allgemein parallelen, seitlich verlaufenden Reihen (14f, 16f) angeordnet sind, wobei die runden Vorsprünge in jeder Reihe seitlich mit Zwischenraum zueinander angeordnet sind, und der Schritt des Zusammenbringens der Tafeln die Positionierung der runden Vorsprünge in einer Reihe der ersten Tafel in einem doppeltkämmenden Verhältnis in Bezug auf die runden Vorsprünge in einer entsprechenden Reihe der zweiten Tafel einschließt, so daß die Plattenstruktur runde Vorsprünge einschließt, die in parallelen Reihen angeordnet sind, wobei jede Reihe abwechselnd runde Vorsprünge der ersten Tafel und runde Vorsprünge der zweiten Tafel einschließt.

14. Verfahren nach einem der Ansprüche 11 bis 13, bei dem die Plattenstruktur die Plattformstruktur einer Palette (12, 50) definiert und worin das Verfahren den ersten Schritt der Bildung der ersten und zweiten Tafel einschließt, so daß diese, wenn sie zusammengebracht werden, weiter zusammenwirken, um eine Vielzahl von mit Zwischenraum angeordneten Füßen (36, 56) zu bilden, die von der Plattformstruktur nach unten verlaufen, um die Plattformstruktur in einem nach oben gerichteten Abstandsverhältnis zu einer Auflagefläche zu positionieren, auf der die Füße positioniert sind.

## Revendications

1. Structure de panneau à double feuille (10, 52, 78, 80, 112, 115, 120), comprenant une première feuille plastique (14), englobant une partie de corps principal plane (14a) comportant des surfaces interne et externe (14g, 14c), et une deuxième feuille plastique (16), espacée parallèlement de ladite première feuille plastique et englobant une partie de corps principal (16a), comportant des surfaces interne et externe (16g, 16c), la première feuille englobant en outre plusieurs bossages creux espacés (14b) ouverts vers la surface externe de la partie de corps principal de la première feuille et englobant des parties de paroi latérale annulaire (14d), s'étendent vers l'intérieur à partir de ladite partie de corps principal de la première feuille et se terminant dans des parties de paroi interne (14e), la deuxième feuille plastique englobant en outre plusieurs bossages creux espacés (16b) ouverts vers la surface externe de la partie de corps principal de la deuxième feuille et englobant des parties de paroi annulaire (16d), s'étendant vers l'intérieur à partir de ladite partie de corps principal de la deuxième feuille et se terminant dans des parties de paroi latérale (16a), caractérisée en ce que les parties de paroi latérale annulaire de certains desdits bossages de la première feuille fusionnent avec les parties de paroi latérale annulaire de certains desdits deuxièmes bossages de la feuille.

2. Structure de panneau selon la revendication 1, dans laquelle au moins certains desdits bossages s'étendant vers l'intérieur sur ladite première feuille sont positionnés dans des espaces entre des bossages adjacents s'étendant vers l'intérieur sur ladite deuxième feuille.

3. Structure de panneau selon la revendication 1, dans laquelle les bossages de la première feuille et les bossages de la deuxième feuille fusionnés sont agencés dans des rangées parallèles (14f, 16f), chaque rangée englobant des bossages de la première feuille et des bossages de la deuxième feuille alternés.

4. Structure de panneau selon la revendication 1, dans laquelle les parties de paroi latérale annulaire desdits bossages de la première feuille et de la deuxième feuille sont effilées vers l'intérieur d'une manière complémentaire, de sorte à définir des interfaces angulaires (22) entre elles, lesdites parties de paroi latérale étant fusionnées au niveau de leurs interfaces angulaires.

5. Structure de panneau selon la revendication 1, dans laquelle les parties de paroi interne desdits bossages de la première feuille sont fusionnées de manière espacée à la surface interne de la partie de corps principal de ladite deuxième feuille, les parties de paroi interne desdits bossages de la deuxième feuille étant fusionnées de manière espacée à la surface interne de la partie de corps principal de ladite première feuille.

6. Structure de panneau (115) selon la revendication 1, dans laquelle les bossages de la première feuille (116), s'étendant vers l'intérieur, sont agencés dans des configurations hexagonales, les bossages de la deuxième feuille (114), s'étendant vers l'intérieur, étant agencés dans des configurations hexagonales complémentaires des configurations hexagonales des bossages s'étendant vers l'intérieur de la première feuille, les bossages d'une configuration de bossages hexagonale définie de la première feuille étant ajustés de manière interdigitale par rapport aux bossages d'une configuration de bossages hexagonale de la deuxième feuille.

7. Structure de panneau selon la revendication 1, dans laquelle:
les bossages sont agencés dans des rangées parallèles (14f, 16f); et
les rangées de bossages de la première feuille sont décalées latéralement et longitudinalement par rapport aux rangées de bossages de la deuxième feuille, de sorte que chaque bossage s'étendant dans une direction définie peut être positionné entre quatre bossages s'étendant dans la direction opposée.

8. Structure de panneau (10) selon l'une quelconque des revendications 1 à 7, dans laquelle la structure de panneau définit la structure de plate-forme d'une palette (12, 50), la palette englobant en outre plusieurs branches espacées (35, 56), s'étendant vers le bas à partir de ladite structure de plate-forme.

9. Structure de panneau selon la revendication 8, dans laquelle les branches sont définies par une coaction supplémentaire des première et deuxième feuilles.

10. Structure de panneau selon la revendication 8, dans laquelle les branches (56) sont formées de structures de panneau à branche empilées (59, 60), chaque structure de panneau à branche étant formée des feuilles supérieures et inférieures (64, 66; 72, 70), définissant respectivement des bossages creux s'étendant vers le haut et vers le bas, interconnectés avec les parties de paroi latérale annulaire de certaines des bossages s'étendant vers le haut, fusionnées aux parties de paroi latérale annulaire de certains des bossages s'étendant vers le bas.

11. Procédé de formage d'une structure de panneau plastique à double feuille (10, 52, 78, 80, 112, 115, 120), dans laquelle une première feuille plastique (14) est formée de sorte à englober une partie de corps principal généralement plane (14a), comportant des surfaces interne et externe (14g, 14c) et plusieurs bossages creux espacés (14b), ouverts vers la surface externe de la partie de corps principal et englobant des parties de paroi latérale annulaire (14d), s'étendant vers l'intérieur à partir de la partie de corps principal et se terminant dans des parties de paroi interne (14e); une deuxième feuille plastique (16) étant formée de sorte à englober une partie de corps principal généralement plane (16a), comportant des surfaces interne et externe (16g, 16c) et plusieurs bossages creux espacés (16b), ouvertes vers la surface externe de la partie de corps principal de la deuxième feuille et englobant des parties de paroi latérale annulaire (16d), s'étendant vers l'intérieur à partir de la partie de corps principal de la deuxième feuille et se terminant dans des parties de paroi interne (16e); caractérisée en ce que
lesdites feuilles sont dans un état chauffé, coulant, les feuilles étant rapprochées pour fusionner lesdites parties de paroi latérale des bossages de ladite première feuille avec les parties de paroi latérale desdits bossages de la deuxième feuille.

12. Procédé selon la revendication 11, dans lequel l'étape de rapprochement des feuilles englobe en outre la fusion des parties de paroi interne desdits bossages de la première feuille à la surface interne de la partie de corps principal de ladite deuxième feuille au niveau d'emplacements situés entre des bossages adjacents de la deuxième feuille, et la fusion des parties de paroi interne desdits bossages de la deuxième feuille à la surface interne de ladite partie de corps principal de la première feuille au niveau d'emplacements entre les bossages adjacents de la deuxième feuille.

13. Procédé selon la revendication 11, dans lequel les bossages desdites première et deuxième feuilles sont agencés dans des rangées s'étendent en général parallèlement et latéralement (14f, 16f) aux bossages dans chaque rangée, espacées latéralement les unes des autres, chaque étape de rapprochement desdites feuilles englobant le positionnement des bossages dans une rangée de ladite première feuille dans une relation interdigitale par rapport aux bossages dans une rangée correspondante de la deuxième feuille, de sorte que ladite structure de panneau englobe des bossages agencés dans des rangées parallèles, chaque rangée englobant des bossages de la première feuille et des bossages de la deuxième feuille alternés.

14. Procédé selon l'une quelconque des revendications 11 à 13, dans lequel la structure de panneau définit la structure de plate-forme d'une palette (12, 50), le procédé englobant la première étape de formation desdites première et deuxième feuilles, de sorte que, lors de leur rapprochement, elles coopèrent davantage pour définir plusieurs branches espacées (35, 56), s'étendant vers le bas à partir de la structure de plate-forme pour positionner la structure de plate-forme dans une relation espacée vers le haut par rapport à une surface de support sur laquelle les branches sont positionnées.
